# EUROPEAN PATENT SPECIFICATION

(11) **EP 4 171 160 B1**
(45) Date of publication and mention of the grant of the patent: **28.01.2026**
(21) Application number: 22194121.4
(22) Date of filing: 06.09.2022
(51) Int. Cl.: H04W 74/0833, H04W 74/0836, H04W 74/0838

(54) **EFFICIENT SIGNALLING OF FEATURES COMBINATION FOR RANDOM ACCESS CHANNEL PARTITIONING**
EFFIZIENTE SIGNALISIERUNG EINER MERKMALSKOMBINATION FÜR DIREKTZUGRIFFSKANALPARTITIONIERUNG
SIGNALISATION EFFICACE D'UNE COMBINAISON DE CARACTÉRISTIQUES POUR UN PARTITIONNEMENT DE CANAL D'ACCÈS ALÉATOIRE

(30) Priority: 22.10.2021 WO PCT/CN2021/125775
(43) Date of publication of application: 26.04.2023
(73) Proprietor: Nokia Technologies Oy, 02610 Espoo (FI)
(72) Inventor: HENTTONEN, Tero, 02760 Espoo (FI); LASELVA, Daniela, 9270 Klarup (DK); TOMALA, Malgorzata, 54-511 Wroclaw (PL); WU, Chunli, Beijing, 100054 (CN)
(74) Representative: Swindell & Pearson Limited

(56) References cited:
- US-A1- 2021 058 971
- ERICSSON: "RACH partitioning for Rel-17 features", vol. RAN WG2, no. Electronic meeting ;20211101 - 20211112, 21 October 2021 (2021-10-21), XP052067004, Retrieved from the Internet <URL:https://ftp.3gpp.org/tsg_ran/WG2_RL2/TSGR2_116-e/Docs/R2-2110559.zip R2-2110559 - RACH partitioning for Rel-17 features.docx> [retrieved on 20211021]
- QUALCOMM INCORPORATED: "Unified approach to RACH partitioning and indication", vol. RAN WG2, no. Online; 20210816 - 20210827, 6 August 2021 (2021-08-06), XP052033965, Retrieved from the Internet <URL:https://ftp.3gpp.org/tsg_ran/WG2_RL2/TSGR2_115-e/Docs/R2-2107219.zip R2-2107219_Unified RACH partitioning and indication.docx> [retrieved on 20210806]

## Description

### TECHNICAL FIELD:

Some example embodiments may generally relate to mobile or wireless telecommunication systems, such as Long Term Evolution (LTE), fifth generation (5G) radio access technology (RAT), new radio (NR) access technology, and/or other communications systems. For example, certain example embodiments may relate to apparatuses, methods and/or computer programs for efficiently signalling feature combinations for random access channel (RACH) partitioning.

### BACKGROUND:

Examples of mobile or wireless telecommunication systems may include radio frequency (RF) 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine-type communication (mMTC). NR is expected to deliver extreme broadband, ultra-robust, low-latency connectivity, and massive networking to support the Internet of Things (IoT). The next generation radio access network (NG-RAN) represents the RAN for 5G, which may provide radio access for NR, LTE, and LTE-A. It is noted that the nodes in 5G providing radio access functionality to a user equipment (*e.g*., similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

ERICSSON, "RACH partitioning for Rel-17 features", vol. RAN WG2, no. Electronic meeting ;20211101 - 20211112, (20211021), 3GPP DRAFT; R2-2110559, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, discusses some general aspects of RACH partitioning describes what a common solution for RACH partitioning for the REL-17 features might look like. In proposal 4, feature combinations are represented by an Information Element.

QUALCOMM INCORPORATED, "Unified approach to RACH partitioning and indication", vol. RAN WG2, no. Online; 20210816 - 20210827, (20210806), 3GPP DRAFT; R2-2107219, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, discusses enhancements that can enable efficient configuration and signaling of RACH features, e.g. two-step RACH, RedCap, small data transfer (SDT), slicing and coverage enhancement. In proposal 1, joint configuration between multiple (≥2) RACH features over a single RACH partition is supported.

US2021058971A1 discloses apparatuses and methods for physical random access channel (PRACH) preamble transmissions or receptions. A method of a UE includes receiving a physical downlink shared channel (PDSCH) that provides a system information block (SIB). The SIB includes an indication for (i) a first transmission configuration indication (TCI) state that provides a first set of quasi-collocation (QCL) properties and (ii) for a second TCI state that provides a second set of QCL properties. The method further includes transmitting a first PRACH according to the first TCI state and a second PRACH according to the second TCI state.

### SUMMARY:

The present invention is as set out in the independent claims.

In accordance with some examples of the disclosure, a method may include transmitting a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration. The radio resources configuration comprises at least one radio access partition assigned to at least one network slice group.

In accordance with certain examples of the disclosure, an apparatus may include means for performing transmitting a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration. The radio resources configuration comprises at least one radio access partition assigned to at least one network slice group.

In accordance with various examples of the disclosure, a non-transitory computer readable medium may be encoded with instructions that may, when executed in hardware, perform a method. The method may include transmitting a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration.

In accordance with some examples of the disclosure, a computer program product may perform a method. The method may include transmitting a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration.

In accordance with certain examples of the disclosure, an apparatus may include at least one processor and at least one memory including computer program code. The at least one memory and the computer program code may be configured to, with the at least one processor, cause the apparatus to at least transmit a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration.

In accordance with various examples of the disclosure, an apparatus may include circuitry configured to transmit a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration.

In accordance with some examples of the disclosure, a method may include receiving, by a user equipment, a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration. The radio resources configuration comprises at least one radio access partition assigned to at least one network slice group.

In accordance with certain examples of the disclosure, an apparatus may include means for performing receiving a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration. The radio resources configuration comprises at least one radio access partition assigned to at least one network slice group.

In accordance with various examples of the disclosure, a non-transitory computer readable medium may be encoded with instructions that may, when executed in hardware, perform a method. The method may include receiving a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration.

In accordance with some examples of the disclosure, a computer program product may perform a method. The method may include receiving a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration.

In accordance with certain examples of the disclosure, an apparatus may include at least one processor and at least one memory including computer program code. The at least one memory and the computer program code may be configured to, with the at least one processor, cause the apparatus to at least receive a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration.

In accordance with various examples of the disclosure, an apparatus may include circuitry configured to receive a radio resources configuration associated with at least one feature combination configuration and associated random access resources configuration. The at least one feature combination configuration is associated with at least one of coverage enhancement, network slicing, reduced capability user equipment, or small data transmission. The associated random access resources configuration is associated with access conditions for the at least one feature combination configuration.

### BRIEF DESCRIPTION OF THE DRAWINGS:

For proper understanding of example embodiments, reference should be made to the accompanying drawings, wherein:
FIG. 1(a) illustrates an example of a 2-step RACH procedure.
FIG. 1(b) illustrates an example of a 4-step RACH procedure.
FIG. 2 illustrates an example of a signaling diagram according to certain example embodiments.
FIG. 3 illustrates an example of a flow diagram of a method according to various example embodiments.
FIG. 4 illustrates an example of a flow diagram of a method according to various example embodiments.
FIG. 5 illustrates an example of various network devices according to some example embodiments.
FIG. 6 illustrates an example of a 5G network and system architecture according to certain example embodiments.

### DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for efficiently signalling feature combinations for RACH partitioning is not intended to limit the scope of certain example embodiments, but is instead representative of selected example embodiments.

RACH resources may define the time and frequency resources that may be used by user equipment (UE) for random access, and may include RACH occasions (ROs) in time and/or RACH preambles available in each RO. When a UE transmits a physical random access channel (PRACH) preamble, the UE may transmit according to a specific pattern or sequence, similar to a signature. Each NR cell may have 64 preamble sequences available for each RO. In contention-based random access (CBRA), once the UE determines a suitable RO, the UE may randomly select one of the valid preambles for transmission in the RO among the available ROs, as configured by the network.

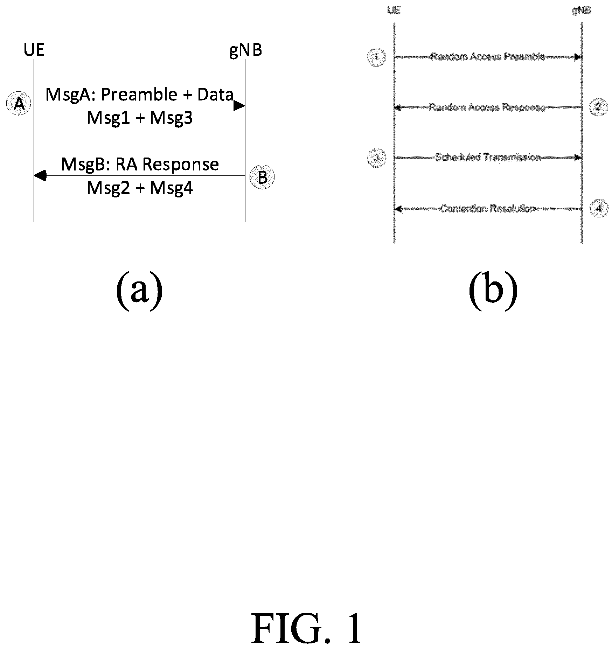

FIG. 1(a) illustrates an example of a 2-step RACH procedure for partitioning of RACH resources, as defined in 3GPP Release (Rel)-16. Similarly, FIG. 1(b) illustrates an example of a 4-step RACH procedure supported in 3GPP Rel-15. The partitioning in the 2-step RACH procedure may require partitioning the entire set of RACH resources into two pools, with each pool dedicated to the corresponding RACH procedure (*i.e.,* 2-step or 4-step RACH).

In 3GPP Rel-16, the gNB may broadcast the two pools using a *RACH-ConfigCommonTwoStepRA* information element (IE), which may be further subdivided via a *GroupB-ConfiguredTwoStepRA-r16* IE contained in the *RACH-ConfigCommonTwoStepRA* IE. The UE may then indicate whether it is using a 2-step or 4-step RACH procedure in message A (MsgA) for 2-step RACH procedure, or in an Msg1 for 4-step RACH, respectively, by selecting and transmitting a RACH resource from the corresponding pool of resources.

Contention-free radio access (CFRA) resources and CBRA resources may be further partitioned. For example, CFRA resources may be dedicated to a given UE (*e.g.,* in RRC Connected mode with an assigned cell radio network temporary identifier (C-RNTI)), while the UE may need to contend for RACH resources in the contention-based pool. For CBRA partitioning, different UEs may select the same CBRA resource, and/or may interfere with other UEs, causing an undesirable RACH collision.

Currently, in order to enable the network to identify each feature based on the preamble/RO used by the UE, RACH resources may be further partitioned to support initial access of some 3GPP Rel-17 features, such as:

| **Feature** | **RACH indication / reason for partitioning** |
|---|---|
| CovEnh | To indicate the need for coverage enhancement (*e.g*., for request of Msg3 repetition) to the network |
| Slicing | To indicate the need for prioritization and isolation of a slice (including RACH isolation) to the network |
| RedCap | To indicate the reduced capabilities of the UE to the network so that the network can adapt subsequent transmissions (as compared to a regular UE) |
| SDT | To indicate the small data transmission (SDT) procedure, thus to request a larger Msg3 size or MSGA size (as compared to regular Msg3/MSGA size for non-SDT/legacy resume) |

The partitioning of RACH resources may be achieved either by partitioning the ROs for different features (*i.e.,* different ROs may be dedicated to different features), or by partitioning the preambles associated with an RO for different features (*i.e.,* different preambles of an RO may be dedicated to different features, as defined in 3GPP Rel-16 for 2-step and 4-step RACH partitioning). However, dedicating ROs per feature may introduce delays in the RA procedure since the UE requiring a feature may need to wait until a valid RO becomes available, with fewer valid ROs available per feature due to splitting of resources. In contrast, preambles in an RO dedicated per feature may be realized, for example, by using a RACH mask, and may allow all features to use any RO, resulting in a lower RA latency achieved for any service in the cell. However, this may limit the number of preambles available per feature. In turn, the probability of undesirable RACH collisions may increase, which may also indirectly increase latency times. The supported cell sizes may also be limited in this case since an increased cell size may require skipping cyclic shifts when creating the PRACH preamble sequences so that larger distances between the cyclic shifts of the PRACH root sequences may be obtained. The number of root sequences may be limited by cell planning and inherent mathematical properties of the sequences themselves. The problem of preamble limitation and collision may worsen with more features to be separated.

In order to configure RACH resources, each cell may need to be selected and use one out of 256 PRACH configurations, determining the RO periodicity and the ROs location in time. Prior to 3GPP Rel-16, RACH capacity and dimensioning has been possible due to the limited number of required RACH resources. For example, with 20ms RO periodicity and 40 MHz carrier bandwidth, about 3% of the resources may be dedicated to RACH. In contrast, beginning with 3GPP Rel-17, separate RACH configurations may need to be available to support initial access for various 3GPP Rel-17 features, thereby increasing the number of resources used for RACH in the cell. As a result, in addition to legacy RACH resources, the network may need to allocate a sufficient number of RACH resources for each additional RACH configuration dedicated to 3GPP Rel-17 features. This may ensure that the tolerable collision probability and latency key performance indicators (KPIs) are within the allowed targets for each feature (*e.g*., <1% PRACH collision probability).

Certain example embodiments described herein may have various benefits and/or advantages to overcome the disadvantages described above. For example, certain example embodiments may provide a more efficient, leaner, and future-proof signalling of feature combinations for RA partitioning. Thus, certain example embodiments discussed below are directed to improvements in computer-related technology.

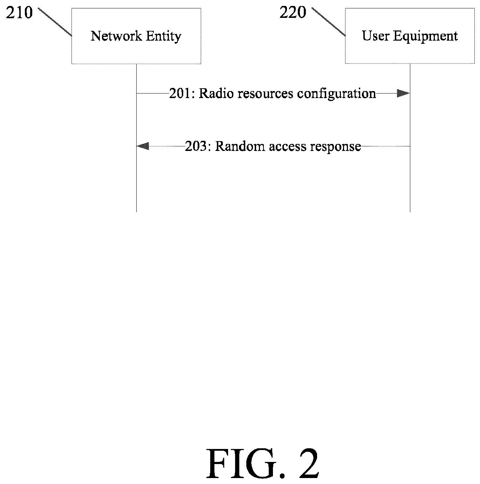

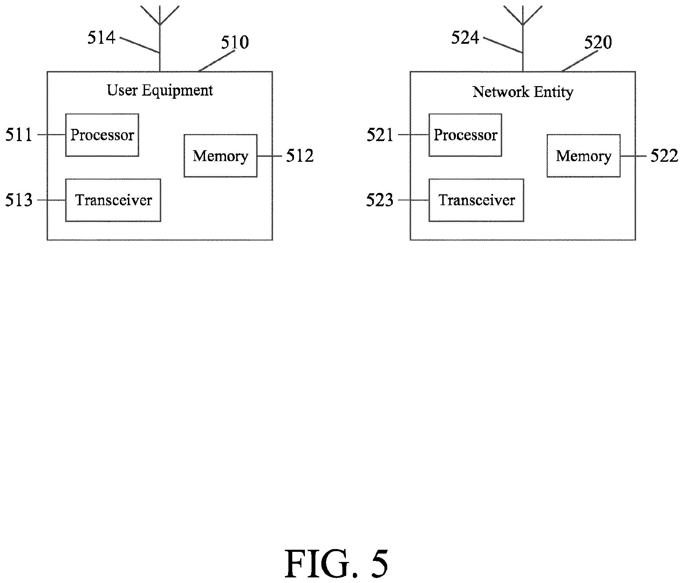

FIG. 2 illustrates a signaling diagram depicting an example of efficiently signalling feature combinations for RACH partitioning. NE 210 and UE 220 may be similar to NE 510 and UE 520, as illustrated in FIG. 5, according to certain example embodiments. At 201, NE 210 may transmit a radio resources configuration associated with at least one feature combination and associated random access resources configuration to UE 220, which may include signalling to indicate to UE 220 feature combinations and associated radio access resources split across the feature combinations applicable to a RACH configuration for NE 210 and UE 220. Some example embodiments may use a fixed number of explicitly reserved bits for signaling, wherein each RA purpose may be indicated by 1 bit, and K bits may be reserved for later changes. For example, each RA partition may be determined under *RACHCommon* configuration based on at least one intended feature or feature combination sets. For example, two Information Elements (*e.g*., bitmaps) may indicate the features or feature combination sets corresponding to the given RA partition. A first bitmap (*i.e.,* denoted *FeatureCombination*) may indicate to the UE the applicable RA purposes/features (*e.g*., RedCap, Small Data, CovEnh, etc.) used by the given cell (max N bits, thus max N purposes/features), while a second bitmap (*i.e.,* denoted *FeatureCombinationIndicationBitmap*) may indicate the actual combinations of RA features and prioritization (max M combinations, *e.g.,* RedCap + Small Data combo) applicable for the UE out of features/purposes set in the first bitmap, such as follows:

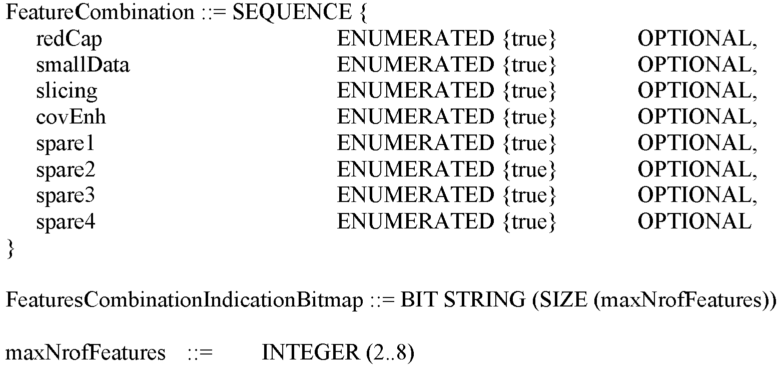

The two example encodings may indicate 4 purposes (*e.g.,* redCap, smallData, slicing, and CovEnh), while 4 bits may be reserved to retain enough flexibility. *FeaturesCombinationIndicationBitmap* may comprise a bit for each feature set to "true" in the *FeatureCombination,* allowing any combination out of those features to be signalled.

In another example, a bit string may be used for the spare values in the *FeatureCombination* (similar to master information block (MIB)), such as below:

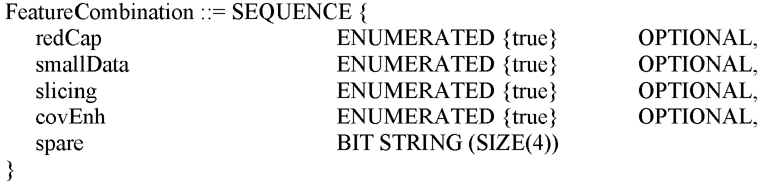

As a result, the bit-cost in system information (SI) would be 3+(2-8) = 5-11 bits added to the RA feature combination. The NE may only need to indicate the bitmap of feature combinations, and the abstract syntax notation (ASN).1 definition of the *FeatureCombination* indicates the remaining features.

Using the above embodiments, 3GPP Rel-17 may be configured as FeatureCombination (size 8): {RedCap: true; smallData: true; slicing: true; CovEnh: true; Reserved: false}, maxNrofFeatures = 4 (4 features set to true). Alternatively, *FeatureCombinationIndicationBitmap* (size 4) may be configured as:

| | RedCap | Small Data | Slicing | CovEnh |
|---|---|---|---|---|
| SDT + RedCap combo | 1 | 1 | 0 | 0 |
| Slicing + CovEnh combo | 0 | 0 | 1 | 1 |

Using the above embodiments, 3GPP Rel-18 may configure the following: FeatureCombination (size 8): o {RedCap: true; smallData: true; slicing: true; CovEnh: true; Rel-18 Feature: true; Reserved: false}; maxNrofFeatures = 5 (5 features set to true). Alternatively, *FeatureCombinationlndicationBitmap* (size 5) may be configured as:

| | RedCap | Small Data | Slicing | CovEnh | R18 Feature |
|---|---|---|---|---|---|
| SDT + RedCap combo | 1 | 1 | 0 | 0 | 0 |
| Slicing + CovEnh combo | 0 | 0 | 1 | 1 | 0 |
| Slicing + CovEnh + R.18 | 0 | 0 | 1 | 1 | 1 |

In various example embodiments, slicing may be indicated implicitly or separately, and/or may be considered or partially in the RA partition. For example, each RA partition defined for the bitmaps in certain example embodiments may be used by the UE assigned to a specific slice group. Additionally or alternatively, slicing may be considered explicitly in the RA partition, but may be restricted to be combined only with a subset of other features (*e.g.,* CovEnh) by using, for example, "CHOICE" type of signalling, an ASN.1 encoding representing a list of options to select.

As an example, a more dynamic list of features may be populated, as shown below, thus allow for almost infinite extendibility as any number of additional RA features could be added at the cost of additional signalling, such as follows:

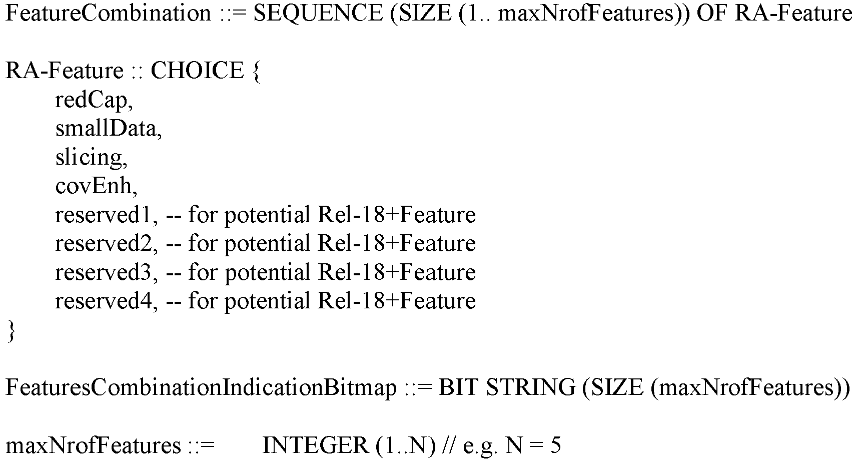

In this way, the bit-cost in SI would be (1-N)*3 + N = N+3 - 4N bits (*e.g.,* 8-20 bits in case N=5, similarly as with previous example the size depending on how many feature combinations are indicated).

In certain example embodiments, slicing may be indicated in a feature combination, with overriding or partial applicability in the RA partition. Specifically, each RA partition (and associated feature combination) corresponds to (*i.e.,* is assigned to) at least one slice group, with slice group = 1 corresponding to a non-slicing case (*i.e*., default slice). For example, slice group 2 may correspond to feature combination 1 (*e.g.,* SDT + RedCap), while slice group 3 may correspond to feature combination 2 (*e.g.,* SDT + covEnh).

In various example embodiments, NE 210 may further indicate a sub-partitioning and/or prioritization within the configured combination of RA features. For example, when the RA feature combination includes two features (*i.e*., Redcap and SmallData), various sub-partitions may be indicated via an additional bitmap, such as RedCap UEs (such as UE 220) doing SDT, Redcap UEs doing non-SDT, non-RedCap UEs doing SDT, and non-Redcap UEs doing non-SDT.

According to some example embodiments, the other cause values may be bundled with slicing; since all services may be associated with at least one slice, prioritization of those services may not be necessary, such as follows:

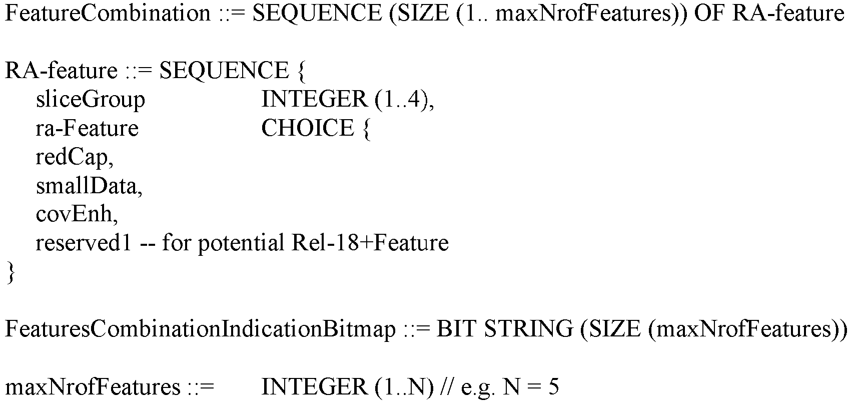

In the example above, the bit cost is 4*. Alternatively, the slices may be signalled separately from the feature combination set and/or with special conditions, but with the feature sets becoming associated with any slice resources, by signalling the slicingGroup outside the FeatureCombination. At 203, UE 220 may then transmit a random access response to NE 210.

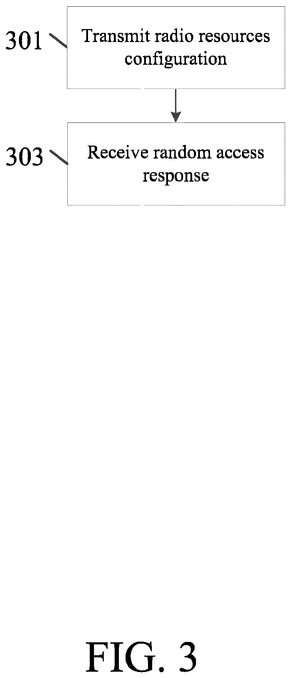

FIG. 3 illustrates an example of a flow diagram of a method that may be performed by a NE, such as NE 520 illustrated in FIG. 5, according to various example embodiments. At 301, the method may include transmitting a radio resources configuration to a UE (which may be similar to UE 510 in FIG. 5), which may include signalling to indicate to the UE feature combinations and associated radio access resources split across the feature combinations applicable to a RACH configuration for the NE and the UE. Some example embodiments may use a fixed number of explicitly reserved bits for signaling, wherein each RA purpose may be indicated by 1 bit, and K bits may be reserved for later changes. For example, each RA partition may be determined under *RACHCommon* configuration based on at least one intended feature or feature combination sets. For example, two bitmaps may indicate the features or feature combination sets corresponding to the given

RA partition. A first bitmap (*i.e.,* denoted *FeatureCombination*) may indicate to the UE the applicable RA purposes/features (*e.g.,* RedCap, Small Data, CovEnh, etc.) used by the given cell (max N bits, thus max N purposes/features), while a second bitmap (*i.e.,* denoted *FeatureCombinationlndicationBitmap*) may indicate the actual combinations of RA features and prioritization (max M combinations, *e.g.,* RedCap + Small Data combo) applicable for the UE out of features/purposes set in the first bitmap, such as follows:

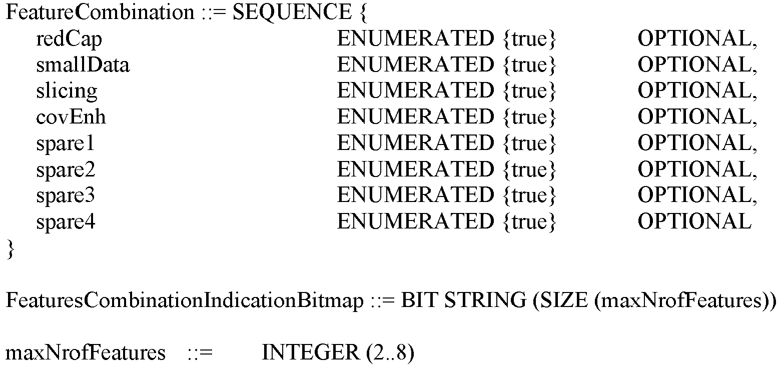

The two example encodings may indicate 4 purposes (*e.g*., redCap, smallData, slicing, and CovEnh), while 4 bits may be reserved to retain enough flexibility. *FeaturesCombinationIndicationBitmap* may comprise a bit for each feature set to "true" in the *FeatureCombination,* allowing any combination out of those features to be signalled.

In another example, a bit string may be used for the spare values in the *FeatureCombination* (similar to MIB), such as below:

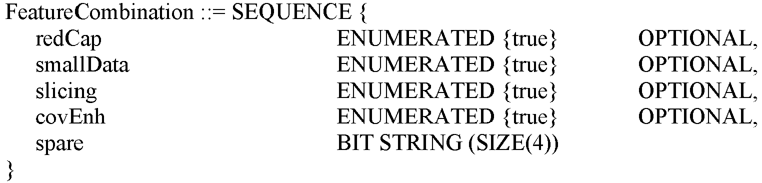

As a result, the bit-cost in SI would be 3+(2-8) = 5-11 bits added to the RA feature combination. The NE may only need to indicate the bitmap of feature combinations, and the ASN.1 definition of the *FeatureCombination* indicates the remaining features.

Using the above embodiments, 3GPP Rel-17 may be configured as FeatureCombination (size 8): {RedCap: true; smallData: true; slicing: true; CovEnh: true; Reserved: false}, maxNrofFeatures = 4 (4 features set to true). Alternatively, *FeatureCombinationIndicationBitmap* (size 4) may be configured as:

| | RedCap | Small Data | Slicing | CovEnh |
|---|---|---|---|---|
| SDT + RedCap combo | 1 | 1 | 0 | 0 |
| Slicing + CovEnh combo | 0 | 0 | 1 | 1 |

Using the above embodiments, 3GPP Rel-18 may configure the following: FeatureCombination (size 8): o {RedCap: true; smallData: true; slicing: true; CovEnh: true; Rel-18 Feature: true; Reserved: false}; maxNrofFeatures = 5 (5 features set to true). Alternatively, *FeatureCombinationIndicationBitmap* (size 5) may be configured as:

| | RedCap | Small Data | Slicing | CovEnh | R18 Feature |
|---|---|---|---|---|---|
| SDT + RedCap combo | 1 | 1 | 0 | 0 | 0 |
| Slicing + CovEnh combo | 0 | 0 | 1 | 1 | 0 |
| Slicing + CovEnh + R.18 | 0 | 0 | 1 | 1 | 1 |

In various example embodiments, slicing may be indicated implicitly or separately, and/or may be considered or partially in the RA partition. For example, each RA partition defined for the bitmaps in certain example embodiments may be used by the UE assigned to a specific slice group. Additionally or alternatively, slicing may be considered explicitly in the RA partition, but may be restricted to be combined only with a subset of other features (*e.g.,* CovEnh) by using "CHOICE" type of signalling, an ASN.1 encoding representing a list of options to select.

As an example, a more dynamic list of features may be populated, as shown below, thus allow for almost infinite extendibility as any number of additional RA features could be added at the cost of additional signalling, such as follows:

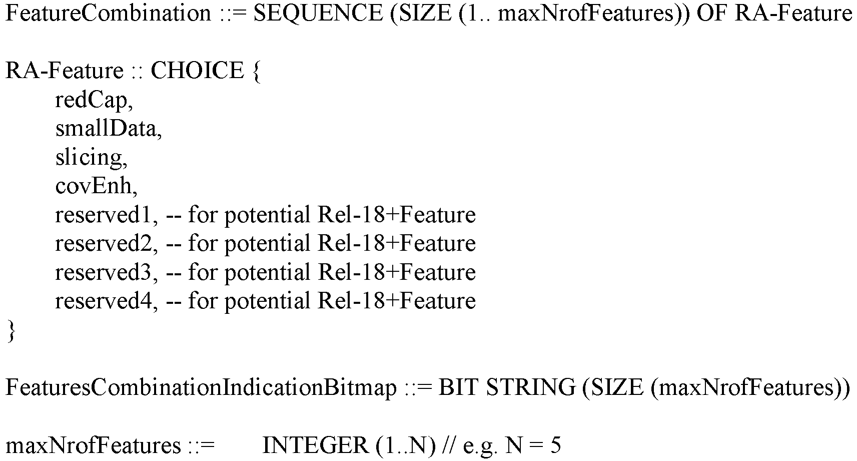

In this way, the bit-cost in SI would be (1-N)*3 + N = N+3 - 4N bits (*e.g.,* 8-20 bits in case N=5, similarly as with previous example the size depending on how many feature combinations are indicated).

In certain example embodiments, slicing may be indicated in a feature combination, with overriding or partial applicability in the RA partition. Specifically, each RA partition (and associated feature combination) corresponds to (*i.e.,* is assigned to) at least one slice group, with slice group = 1 corresponding to a non-slicing case (*i.e*., default slice). For example, slice group 2 may correspond to feature combination 1 (*e.g.,* SDT + RedCap), while slice group 3 may correspond to feature combination 2 (*e.g.,* SDT + covEnh).

In various example embodiments, the NE may further indicate a sub-partitioning and/or prioritization within the configured combination of RA features. For example, when the RA feature combination includes two features (*i.e*., Redcap and SmallData), various sub-partitions may be indicated via an additional bitmap, such as Redcap UEs (such as the UE) doing SDT, Redcap UEs doing non-SDT, non-Redcap UEs doing SDT, and non-Redcap UEs doing non-SDT.

According to some example embodiments, all other cause values may be bundled with slicing; since all services may be associated with at least one slice, prioritization of those services may not be necessary, such as follows:

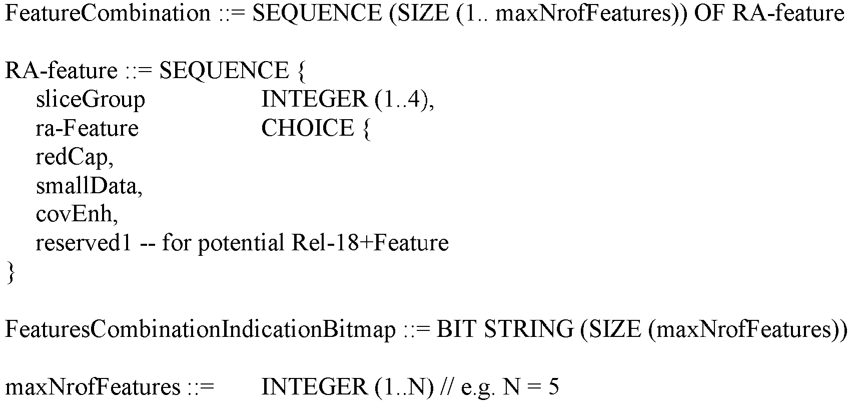

In the example above, the bit cost is 4*. Alternatively, the slices may be signalled separately from the feature combination set and/or with special conditions, but with the feature sets becoming associated with slice resources, by signalling the slicingGroup outside the FeatureCombination. At 303, the method may further include receiving a random access response from the UE.

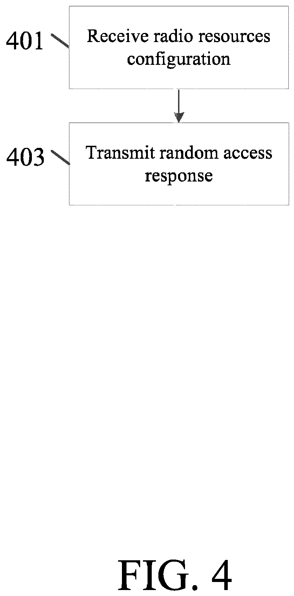

FIG. 4 illustrates an example of a flow diagram of a method that may be performed by a UE, such as UE 520 illustrated in FIG. 5, according to various example embodiments. At 401, the method may include receiving a radio resources configuration from a NE (which may be similar to NE 510 in FIG. 5), which may include signalling to indicate to the UE feature combinations and associated radio access resources split across the feature combinations applicable to a RACH configuration for the NE and the UE. Some example embodiments may use a fixed number of explicitly reserved bits for signaling, wherein each RA purpose may be indicated by 1 bit, and K bits may be reserved for later changes. For example, each RA partition may be determined under *RACHCommon* configuration based on at least one intended feature or feature combination sets. For example, two bitmaps may indicate the features or feature combination sets corresponding to the given RA partition. A first bitmap (*i.e.,* denoted *FeatureCombination*) may indicate to the UE the applicable RA purposes/features (*e.g.,* RedCap, Small Data, CovEnh, etc.) used by the given cell (max N bits, thus max N purposes/features), while a second bitmap (*i.e.,* denoted *FeatureCombinationIndicationBitmap*) may indicate the actual combinations of RA features and prioritization (max M combinations, *e.g.,* RedCap + Small Data combo) applicable for the UE out of features/purposes set in the first bitmap, such as follows:

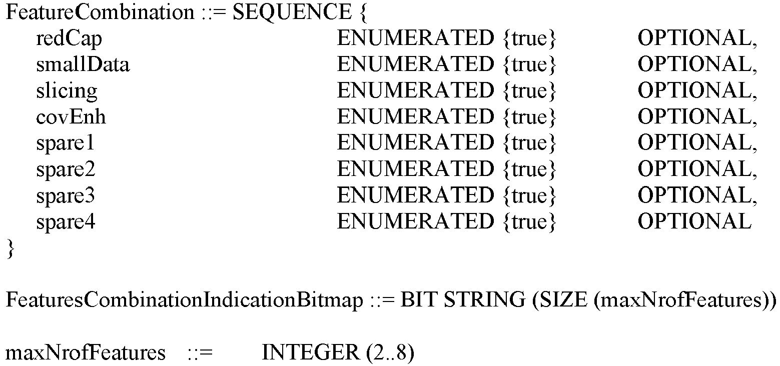

The two example encodings may indicate 4 purposes (*e.g*., redCap, smallData, slicing, and CovEnh), while 4 bits may be reserved to retain enough flexibility. *FeaturesCombinationIndicationBitmap* may comprise a bit for each feature set to "true" in the *FeatureCombination,* allowing any combination out of those features to be signalled.

In another example, a bit string may be used for the spare values in the *FeatureCombination* (similar to MIB), such as below:

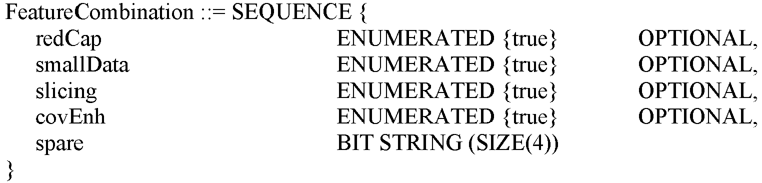

As a result, the bit-cost in SI would be 3+(2-8) = 5-11 bits added to the RA feature combination. The NE may only need to indicate the bitmap of feature combinations, and the ASN.1 definition of the *FeatureCombination* indicates the remaining features.

Using the above embodiments, 3GPP Rel-17 may be configured as FeatureCombination (size 8): {RedCap: true; smallData: true; slicing: true; CovEnh: true; Reserved: false}, maxNrofFeatures = 4 (4 features set to true). Alternatively, *FeatureCombinationIndicationBitmap* (size 4) may be configured as:

| | RedCap | Small Data | Slicing | CovEnh |
|---|---|---|---|---|
| SDT + RedCap combo | 1 | 1 | 0 | 0 |
| Slicing + CovEnh combo | 0 | 0 | 1 | 1 |

Using the above embodiments, 3GPP Rel-18 may configure the following: FeatureCombination (size 8): o {RedCap: true; smallData: true; slicing: true; CovEnh: true; Rel-18 Feature: true; Reserved: false}; maxNrofFeatures = 5 (5 features set to true). Alternatively, *FeatureCombinationIndicationBitmap* (size 5) may be configured as:

| | RedCap | Small Data | Slicing | CovEnh | R18 Feature |
|---|---|---|---|---|---|
| SDT + RedCap combo | 1 | 1 | 0 | 0 | 0 |
| Slicing + CovEnh combo | 0 | 0 | 1 | 1 | 0 |
| Slicing + CovEnh + R.18 | 0 | 0 | 1 | 1 | 1 |

In various example embodiments, slicing may be indicated implicitly or separately, and/or may be considered or partially in the RA partition. For example, each RA partition defined for the bitmaps in certain example embodiments may be used by the UE assigned to a specific slice group. Additionally or alternatively, slicing may be considered explicitly in the RA partition, but may be restricted to be combined only with a subset of other features (e.g., CovEnh) by using "CHOICE" type of signalling, an ASN.1 encoding representing s list of options to select.

As an example, a more dynamic list of features may be populated, as shown below, thus allow for almost infinite extendibility as any number of additional RA features could be added at the cost of additional signalling, such as follows:

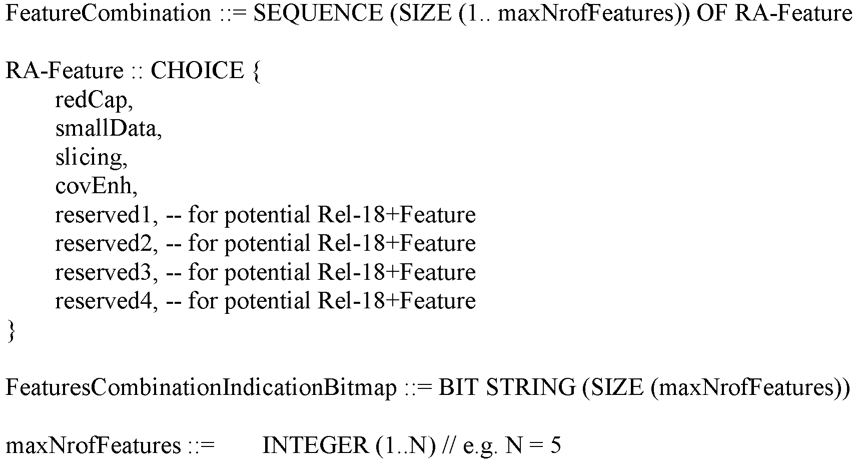

In this way, the bit-cost in SI would be (1-N)*3 + N = N+3 - 4N bits (*e.g.,* 8-20 bits in case N=5, similarly as with previous example the size depending on how many feature combinations are indicated).

In certain example embodiments, slicing may be indicated in a feature combination, with overriding or partial applicability in the RA partition. Specifically, each RA partition (and associated feature combination) corresponds to (*i.e.,* is assigned to) at least one slice group, with slice group = 1 corresponding to a non-slicing case (*i.e*., default slice). For example, slice group 2 may correspond to feature combination 1 (*e.g.,* SDT + RedCap), while slice group 3 may correspond to feature combination 2 (*e.g.,* SDT + covEnh).

In various example embodiments, the NE may further indicate a sub-partitioning and/or prioritization within the configured combination of RA features. For example, when the RA feature combination includes two features (*i.e*., Redcap and SmallData), various sub-partitions may be indicated via an additional bitmap, such as Redcap UEs (such as the UE) doing SDT, Redcap UEs doing non-SDT, non-Redcap UEs doing SDT, and non-Redcap UEs doing non-SDT.

According to some example embodiments, all other cause values may be bundled with slicing; since all services may be associated with at least one slice, prioritization of those services may not be necessary, such as follows:

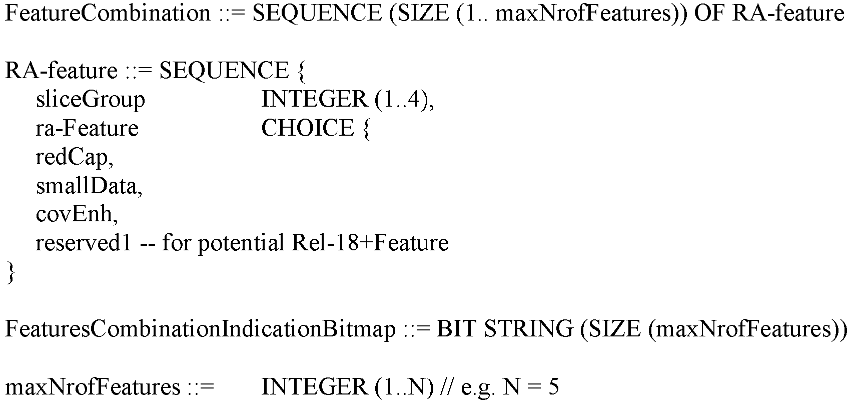

In the example above, the bit cost is 4*. Alternatively, the slices may be signalled separately from the feature combination set and/or with special conditions, but with the feature sets becoming associated with slice resources, by signalling the slicingGroup outside the FeatureCombination. At 403, the method may further include transmitting a random access response to the NE.

FIG. 5 illustrates an example of a system according to certain example embodiments. In one example embodiment, a system may include multiple devices, such as, for example, UE 510 and/or NE 520.

UE 510 may include one or more of a mobile device, such as a mobile phone, smart phone, personal digital assistant (PDA), tablet, or portable media player, digital camera, pocket video camera, video game console, navigation unit, such as a global positioning system (GPS) device, desktop or laptop computer, single-location device, such as a sensor or smart meter, or any combination thereof.

NE 520 may be one or more of a base station, such as an eNB or gNB, a serving gateway, a server, and/or any other access node or combination thereof. Furthermore, UE 510 and/or NE 520 may be one or more of a citizens broadband radio service device (CBSD).

NE 520 may further comprise at least one gNB-CU, which may be associated with at least one gNB-DU. The at least one gNB-CU and the at least one gNB-DU may be in communication via at least one F1 interface, at least one Xₙ-C interface, and/or at least one NG interface via a 5GC.

UE 510 and/or NE 520 may include at least one processor, respectively indicated as 511 and 521. Processors 511 and 521 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 512 and 522. The memory may be fixed or removable. The memory may include computer program instructions or computer code contained therein. Memories 512 and 522 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

Processors 511 and 521, memories 512 and 522, and any subset thereof, may be configured to provide means corresponding to the various blocks of FIGs. 2-4. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 5, transceivers 513 and 523 may be provided, and one or more devices may also include at least one antenna, respectively illustrated as 514 and 524. The device may have many antennas, such as an array of antennas configured for multiple input multiple output (MIMO) communications, or multiple antennas for multiple RATs. Other configurations of these devices, for example, may be provided. Transceivers 513 and 523 may be a transmitter, a receiver, both a transmitter and a receiver, or a unit or device that may be configured both for transmission and reception.

The memory and the computer program instructions may be configured, with the processor for the particular device, to cause a hardware apparatus, such as UE, to perform any of the processes described above (*i.e.,* FIGs. 2-4). Therefore, in certain example embodiments, a non-transitory computer-readable medium may be encoded with computer instructions that, when executed in hardware, perform a process such as one of the processes described herein. Alternatively, certain example embodiments may be performed entirely in hardware.

In certain example embodiments, an apparatus may include circuitry configured to perform any of the processes or functions illustrated in FIGs. 2-4. For example, circuitry may be hardware-only circuit implementations, such as analog and/or digital circuitry. In another example, circuitry may be a combination of hardware circuits and software, such as a combination of analog and/or digital hardware circuitry with software or firmware, and/or any portions of hardware processors with software (including digital signal processors), software, and at least one memory that work together to cause an apparatus to perform various processes or functions. In yet another example, circuitry may be hardware circuitry and or processors, such as a microprocessor or a portion of a microprocessor, that includes software, such as firmware, for operation. Software in circuitry may not be present when it is not needed for the operation of the hardware.

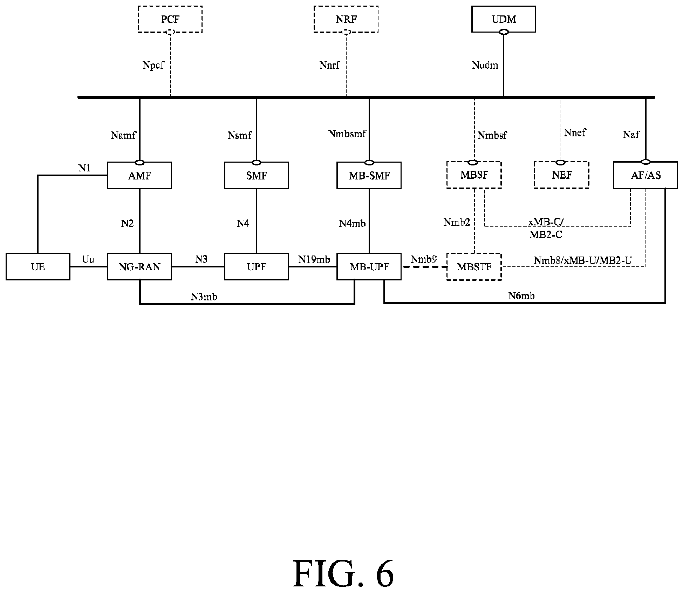

FIG. 6 illustrates an example of a 5G network and system architecture according to certain example embodiments. Shown are multiple network functions that may be implemented as software operating as part of a network device or dedicated hardware, as a network device itself or dedicated hardware, or as a virtual function operating as a network device or dedicated hardware. The NE and UE illustrated in FIG. 6 may be similar to UE 510 and NE 520, respectively. The user plane function (UPF) may provide services such as intra-RAT and inter-RAT mobility, routing and forwarding of data packets, inspection of packets, user plane quality of service (QoS) processing, buffering of downlink packets, and/or triggering of downlink data notifications. The application function (AF) may primarily interface with the core network to facilitate application usage of traffic routing and interact with the policy framework.

According to certain example embodiments, processor 511 and memory 512 may be included in or may form a part of processing circuitry or control circuitry. In addition, in some example embodiments, transceiver 513 may be included in or may form a part of transceiving circuitry.

The features, structures, or characteristics of example embodiments described throughout this specification may be combined in any suitable manner in one or more example embodiments. For example, the usage of the phrases "various embodiments," "certain embodiments," "some embodiments," or other similar language throughout this specification refers to the fact that a particular feature, structure, or characteristic described in connection with an example embodiment may be included in at least one example embodiment. Thus, appearances of the phrases "in various embodiments," "in certain embodiments," "in some embodiments," or other similar language throughout this specification does not necessarily all refer to the same group of example embodiments, and the described features, structures, or characteristics may be combined in any suitable manner in one or more example embodiments.

Additionally, if desired, the different functions or procedures discussed above may be performed in a different order and/or concurrently with each other. Furthermore, if desired, one or more of the described functions or procedures may be optional or may be combined. As such, the description above should be considered as illustrative of the principles and teachings of certain example embodiments, and not in limitation thereof.

### Partial Glossary

- 3GPP: Third Generation Partnership Project
- 5G: Fifth Generation
- 5GC: Fifth Generation Core
- 5GS: Fifth Generation System
- ASIC: Application Specific Integrated Circuit
- ASN: Abstract Syntax Notation
- BS: Base Station
- CBRA: Contention-Based Random Access
- CBSD: Citizens Broadband Radio Service Device
- CFRA: Contention-Free Random Access
- CE: Coverage Enhancement
- CG: Configured Grant
- CN: Core Network
- C-RNTI: Cell Radio Network Temporary Identifier
- CovEnh: Coverage Enhancement
- CPU: Central Processing Unit
- eMBB: Enhanced Mobile Broadband
- eMTC: Enhanced Machine Type Communication
- eNB: Evolved Node B
- EPS: Evolved Packet System
- gNB: Next Generation Node B
- GPS: Global Positioning System
- HDD: Hard Disk Drive
- IE: Information Element
- KPI: Key Performance Indicator
- LTE: Long-Term Evolution
- LTE-A: Long-Term Evolution Advanced
- MAC: Medium Access Control
- MEMS: Micro Electrical Mechanical System
- MIB: Master Information Block
- MIMO: Multiple Input Multiple Output
- MME: Mobility Management Entity
- mMTC: Massive Machine Type Communication
- MTC: Machine Type Communication
- NAS: Non-Access Stratum
- NB-IoT: Narrowband Internet of Things
- NE: Network Entity
- NG: Next Generation
- NG-eNB: Next Generation Evolved Node B
- NG-RAN: Next Generation Radio Access Network
- NR: New Radio
- NR-U: New Radio Unlicensed
- PDA: Personal Digital Assistance
- PRACH: Physical Random Access Channel
- PUR: Periodic Uplink Resources
- RA: Random Access
- RACH: Random Access Channel
- RAM: Random Access Memory
- RAN: Radio Access Network
- RAT: Radio Access Technology
- RedCap: Reduced Capability
- RNTI: Radio Network Temporary Identifier
- RO: Random Access Channel Occasion
- RRC: Radio Resource Control
- SD: Small Data
- SDT: Small Data Transmission
- SI: System Information
- SIB: System Information Block
- SMF: Session Management Function
- SRB: Signaling Radio Bearer
- UE: User Equipment
- UMTS: Universal Mobile Telecommunications System
- UPF: User Plane Function
- URLLC: Ultra-Reliable and Low-Latency Communication
- UTRAN: Universal Mobile Telecommunications System Terrestrial Radio Access Network
- WLAN: Wireless Local Area Network

## Claims

1. An apparatus (210) comprising means (521, 522, 523) for performing:
transmitting a radio resources configuration associated with at least one feature combination configuration and associated random access resources configuration,
wherein the at least one feature combination configuration is associated with at least one of coverage enhancement, network slicing, reduced capability user equipment, or small data transmission,
wherein the associated random access resources configuration is associated with access conditions for the at least one feature combination configuration, and
wherein the radio resources configuration comprises at least one radio access partition assigned to at least one network slice group.

2. The apparatus (210) of claim 1, wherein the at least one feature combination configuration is transmitted with at least one bit string to indicate at least one feature combination applicability for using the associated random access resources.

3. The apparatus (210) of any of claims 1 or 2, wherein the associated random access resources configuration comprises at least one radio access channel partition accessible at a certain time with a certain preamble.

4. The apparatus (210) of any of claims 1-3, wherein the at least one feature combination configuration comprises at least one of:
at least one bit configured to indicate at least one feature combination association with the associated random access resources; or
at least one reserved bit; or
at least a selection list configured to determine the at least one feature combination associated with the random access resources.

5. An apparatus (220) comprising means (511, 512, 513) for performing:
receiving, by a user equipment, a radio resources configuration associated with at least one feature combination configuration and associated random access resources configuration,
wherein the at least one feature combination configuration is associated with at least one of coverage enhancement, network slicing, reduced capability user equipment, or small data transmission,
wherein the associated random access resources configuration is associated with access conditions for the at least one feature combination configuration, and
wherein the radio resources configuration comprises at least one radio access partition assigned to at least one network slice group.

6. The apparatus of claim 5, wherein the at least one feature combination configuration is received with at least one bit string to indicate at least one feature combination applicability for using the associated random access resources.

7. The apparatus (220) of claims 5 or 6, wherein the associated random access resources configuration comprises at least one radio access channel partition accessible at a certain time with a certain preamble.

8. The apparatus (220) of any of claims 5-7, wherein the at least one feature combination configuration comprises at least one bit configured to indicate at least one feature combination association with the associated random access resources.

9. The apparatus (220) of any of claims 5-8, wherein the at least one feature combination configuration comprises at least one reserved bit.

10. The apparatus (220) of any of claims 5-9, wherein the at least one feature combination configuration comprises at least a selection list configured to determine the at least one feature combination associated with the random access resources.

11. The apparatus (220) of any of claims 5-10, wherein the radio resources configuration comprises at least one sub-partition associated with at least one of:
reduced capability user equipment configured to perform small data transmission;
reduced capability user equipment configured to perform non-small data transmission;
non-reduced capability user equipment configured to perform small data transmission; or
non-reduced capability user equipment being non-configured to perform small data transmission.

12. A method comprising:
transmitting a radio resources configuration associated with at least one feature combination configuration and associated random access resources configuration,
wherein the at least one feature combination configuration is associated with at least one of coverage enhancement, network slicing, reduced capability user equipment, or small data transmission,
wherein the associated random access resources configuration is associated with access conditions for the at least one feature combination configuration, and
wherein the radio resources configuration comprises at least one radio access partition assigned to at least one network slice group.

13. A computer program comprising instructions to cause the apparatus of any of claims 1 to 4 to perform the method of claim 12.

14. A method comprising:
receiving, by a user equipment, a radio resources configuration associated with at least one feature combination configuration and associated random access resources configuration,
wherein the at least one feature combination configuration is associated with at least one of coverage enhancement, network slicing, reduced capability user equipment, or small data transmission,
wherein the associated random access resources configuration is associated with access conditions for the at least one feature combination configuration, and
wherein the radio resources configuration comprises at least one radio access partition assigned to at least one network slice group.

15. A computer program comprising instructions to cause the apparatus of any of claims 5 to 11 to perform the method of claim 14.

## Patentansprüche

1. Einrichtung (210), die Mittel (521, 522, 523) zum Durchführen von Folgendem umfasst:
Übertragen einer Funkressourcenauslegung, die mit mindestens einer Merkmalskombinationsauslegung verknüpft ist und mit einer Direktzugriffsressourcenauslegung verknüpft ist,
wobei die mindestens eine Merkmalskombinationsauslegung mit mindestens einem von einer Abdeckungsverbesserung, einem Netzwerkslicing, einer Teilnehmereinrichtung mit reduzierter Fähigkeit oder einer Kleindatenübertragung verknüpft ist,
wobei die verknüpfte Direktzugriffsressourcenauslegung mit Zugangsbedingungen für die mindestens eine Merkmalskombinationsauslegung verknüpft ist, und
wobei die Funkressourcenauslegung mindestens eine Funkzugangspartition umfasst, die mit mindestens einer Netzwerkslicegruppe verknüpft ist.

2. Einrichtung (210) nach Anspruch 1, wobei die mindestens eine Merkmalskombinationsauslegung mit mindestens einer Bitzeichenfolge übertragen wird, um mindestens eine Merkmalskombinationsanwendbarkeit zum Verwenden der verknüpften Direktzugriffsressourcen anzuzeigen.

3. Einrichtung (210) nach einem der Ansprüche 1 bis 2, wobei die verknüpfte Direktzugriffsressourcenauslegung mindestens eine Funkzugangskanalpartition umfasst, auf die zu einer bestimmten Zeit mit einer bestimmten Präambel zugegriffen werden kann.

4. Einrichtung (210) nach einem der Ansprüche 1 bis 3, wobei die mindestens eine Merkmalskombinationsauslegung mindestens eines von Folgendem umfasst:
mindestens einem Bit, das dazu ausgelegt ist, mindestens eine Merkmalskombinationsverknüpfung mit den verknüpften Direktzugriffsressourcen anzuzeigen; oder
mindestens einem reservierte Bit; oder
mindestens einer Auswahlliste, die dazu ausgelegt ist, die mindestens eine Merkmalskombination, die mit den Direktzugriffsressourcen verknüpft ist, zu bestimmen.

5. Einrichtung (220), die Mittel (511, 512, 513) zum Durchführen von Folgendem umfasst:
Empfangen einer Funkressourcenauslegung, die mit mindestens einer Merkmalskombinationsauslegung verknüpft ist und mit einer Direktzugriffsressourcenauslegung verknüpft ist, durch eine Teilnehmereinrichtung,
wobei die mindestens eine Merkmalskombinationsauslegung mit mindestens einem von einer Abdeckungsverbesserung, einem Netzwerkslicing, einer Teilnehmereinrichtung mit reduzierter Fähigkeit oder einer Kleindatenübertragung verknüpft ist,
wobei die verknüpfte Direktzugriffsressourcenauslegung mit Zugangsbedingungen für die mindestens eine Merkmalskombinationsauslegung verknüpft ist, und
wobei die Funkressourcenauslegung mindestens eine Funkzugangspartition umfasst, die mit mindestens einer Netzwerkslicegruppe verknüpft ist.

6. Einrichtung nach Anspruch 5, wobei die mindestens eine Merkmalskombinationsauslegung mit mindestens einer Bitzeichenfolge empfangen wird, um mindestens eine Merkmalskombinationsanwendbarkeit zum Verwenden der verknüpften Direktzugriffsressourcen anzuzeigen.

7. Einrichtung (220) nach Anspruch 5 oder 6, wobei die verknüpfte Direktzugriffsressourcenauslegung mindestens eine Funkzugangskanalpartition umfasst, auf die zu einer bestimmten Zeit mit einer bestimmten Präambel zugegriffen werden kann.

8. Einrichtung (220) nach einem der Ansprüche 5 bis 7, wobei die mindestens eine Merkmalskombinationsauslegung mindestens ein Bit umfasst, das dazu ausgelegt ist, mindestens eine Merkmalskombinationsverknüpfung mit den verknüpften Direktzugriffsressourcen anzuzeigen.

9. Einrichtung (220) nach einem der Ansprüche 5 bis 8, wobei die mindestens eine Merkmalskombinationsauslegung mindestens ein reserviertes Bit umfasst.

10. Einrichtung (220) nach einem der Ansprüche 5 bis 9, wobei die mindestens eine Merkmalskombinationsauslegung mindestens eine Auswahlliste umfasst, die dazu ausgelegt ist, die mindestens eine Merkmalskombination anzuzeigen, die mit den Direktzugriffsressourcen verknüpft ist.

11. Einrichtung (220) nach einem der Ansprüche 5 bis 10, wobei die Funkressourcenauslegung mindestens eine Unterpartition umfasst, die mit mindestens einem von Folgendem verknüpft ist:
einer Teilnehmereinrichtung mit reduzierter Fähigkeit, die dazu ausgelegt ist, eine Kleindatenübertragung durchzuführen;
einer Teilnehmereinrichtung mit reduzierter Fähigkeit, die dazu ausgelegt ist, eine Nicht-Kleindatenübertragung durchzuführen;
einer Teilnehmereinrichtung mit nicht reduzierter Fähigkeit, die dazu ausgelegt ist, eine Kleindatenübertragung durchzuführen; oder
einer Teilnehmereinrichtung mit nicht reduzierter Fähigkeit, die nicht dazu ausgelegt ist, eine Kleindatenübertragung durchzuführen.

12. Verfahren, das Folgendes umfasst:
Übertragen einer Funkressourcenauslegung, die mit mindestens einer Merkmalskombinationsauslegung verknüpft ist und mit einer Direktzugriffsressourcenauslegung verknüpft ist,
wobei die mindestens eine Merkmalskombinationsauslegung mit mindestens einem von einer Abdeckungsverbesserung, einem Netzwerkslicing, einer Teilnehmereinrichtung mit reduzierter Fähigkeit oder einer Kleindatenübertragung verknüpft ist,
wobei die verknüpfte Direktzugriffsressourcenauslegung mit Zugangsbedingungen für die mindestens eine Merkmalskombinationsauslegung verknüpft ist, und
wobei die Funkressourcenauslegung mindestens eine Funkzugangspartition umfasst, die mit mindestens einer Netzwerkslicegruppe verknüpft ist.

13. Computerprogramm, das Anweisungen zum Veranlassen der Einrichtung nach einem der Ansprüche 1 bis 4, das Verfahren nach Anspruch 12 durchzuführen, umfasst.

14. Verfahren, das Folgendes umfasst:
Empfangen einer Funkressourcenauslegung, die mit mindestens einer Merkmalskombinationsauslegung verknüpft ist und mit einer Direktzugriffsressourcenauslegung verknüpft ist, durch eine Teilnehmereinrichtung,
wobei die mindestens eine Merkmalskombinationsauslegung mit mindestens einem von einer Abdeckungsverbesserung, einem Netzwerkslicing, einer Teilnehmereinrichtung mit reduzierter Fähigkeit oder einer Kleindatenübertragung verknüpft ist,
wobei die verknüpfte Direktzugriffsressourcenauslegung mit Zugangsbedingungen für die mindestens eine Merkmalskombinationsauslegung verknüpft ist, und
wobei die Funkressourcenauslegung mindestens eine Funkzugangspartition umfasst, die mit mindestens einer Netzwerkslicegruppe verknüpft ist.

15. Computerprogramm, das Anweisungen zum Veranlassen der Einrichtung nach einem der Ansprüche 5 bis 11, das Verfahren nach Anspruch 14 durchzuführen, umfasst.

## Revendications

1. Appareil (210) comprenant des moyens (521, 522, 523) pour réaliser ce qui suit :
transmettre une configuration de ressources radio associée à une configuration d'au moins une combinaison de caractéristiques et une configuration de ressources d'accès aléatoire associée,
dans lequel la configuration d'au moins une combinaison de caractéristiques est associée à au moins un parmi une amélioration de couverture, un découpage de réseau, un équipement utilisateur à capacité réduite ou une transmission de petites données,
dans lequel la configuration de ressources d'accès aléatoire associée est associée à des conditions d'accès pour la configuration d'au moins une combinaison de caractéristiques, et
dans lequel la configuration de ressources radio comprend au moins une partition d'accès radio attribuée à au moins un groupe de tranches de réseau.

2. Appareil (210) selon la revendication 1, dans lequel la configuration d'au moins une combinaison de caractéristiques est transmise avec au moins une chaîne de bits pour indiquer une applicabilité d'au moins une combinaison de caractéristiques pour utiliser les ressources d'accès aléatoire associées.

3. Appareil (210) de l'une des revendications 1 ou 2, dans lequel la configuration de ressources d'accès aléatoire associée comprend au moins une partition de canal d'accès radio accessible à un certain temps avec un certain préambule.

4. Appareil (210) de l'une des revendications 1 à 3, dans lequel la configuration d'au moins une combinaison de caractéristiques comprend au moins un parmi :
au moins un bit configuré pour indiquer une association d'au moins une combinaison de caractéristiques avec les ressources d'accès aléatoire associées ; ou
au moins un bit réservé ; ou
au moins une liste de sélection configurée pour déterminer l'au moins une combinaison de caractéristiques associée aux ressources d'accès aléatoire.

5. Appareil (220) comprenant des moyens (511, 512, 513) pour réaliser ce qui suit :
recevoir, par un équipement utilisateur, une configuration de ressources radio associée à une configuration d'au moins une combinaison de caractéristiques et une configuration de ressources d'accès aléatoire associée,
dans lequel la configuration d'au moins une combinaison de caractéristiques est associée à au moins un parmi une amélioration de couverture, un découpage de réseau, un équipement utilisateur à capacité réduite ou une transmission de petites données,
dans lequel la configuration de ressources d'accès aléatoire associée est associée à des conditions d'accès pour la configuration d'au moins une combinaison de caractéristiques, et
dans lequel la configuration de ressources radio comprend au moins une partition d'accès radio attribuée à au moins un groupe de tranches de réseau.

6. Appareil selon la revendication 5, dans lequel la configuration d'au moins une combinaison de caractéristiques est reçue avec au moins une chaîne de bits pour indiquer une applicabilité d'au moins une combinaison de caractéristiques pour utiliser les ressources d'accès aléatoire associées.

7. Appareil (220) selon la revendication 5 ou 6, dans lequel la configuration de ressources d'accès aléatoire associée comprend au moins une partition de canal d'accès radio accessible à un certain temps avec un certain préambule.

8. Appareil (220) de l'une des revendications 5 à 7, dans lequel la configuration d'au moins une combinaison de caractéristiques comprend au moins un bit configuré pour indiquer une association d'au moins une combinaison de caractéristiques avec les ressources d'accès aléatoire associées.

9. Appareil (220) de l'une des revendications 5 à 8, dans lequel la configuration d'au moins une combinaison de caractéristiques comprend au moins un bit réservé.

10. Appareil (220) de l'une des revendications 5 à 9, dans lequel la configuration d'au moins une combinaison de caractéristiques comprend au moins une liste de sélection configurée pour déterminer l'au moins une combinaison de caractéristiques associée aux ressources d'accès aléatoire.

11. Appareil (220) de l'une des revendications 5 à 10, dans lequel la configuration de ressources radio comprend au moins une sous-partition associée à au moins un parmi :
un équipement utilisateur à capacité réduite configuré pour effectuer une transmission de petites données ;
un équipement utilisateur à capacité réduite configuré pour effectuer une transmission de petites données non petites ;
un équipement utilisateur à capacité non réduite configuré pour effectuer une transmission de petites données ; ou
un équipement utilisateur à capacité non réduite non configuré pour effectuer une transmission de petites données.

12. Procédé comprenant les étapes suivantes :
transmettre une configuration de ressources radio associée à une configuration d'au moins une combinaison de caractéristiques et une configuration de ressources d'accès aléatoire associée,
dans lequel la configuration d'au moins une combinaison de caractéristiques est associée à au moins un parmi une amélioration de couverture, un découpage de réseau, un équipement utilisateur à capacité réduite ou une transmission de petites données,
dans lequel la configuration de ressources d'accès aléatoire associée est associée à des conditions d'accès pour la configuration d'au moins une combinaison de caractéristiques, et
dans lequel la configuration de ressources radio comprend au moins une partition d'accès radio attribuée à au moins un groupe de tranches de réseau.

13. Programme informatique comprenant des instructions pour amener l'appareil de l'une des revendications 1 à 4 à réaliser le procédé selon la revendication 12.

14. Procédé comprenant les étapes suivantes :
recevoir, par un équipement utilisateur, une configuration de ressources radio associée à une configuration d'au moins une combinaison de caractéristiques et une configuration de ressources d'accès aléatoire associée,
dans lequel la configuration d'au moins une combinaison de caractéristiques est associée à au moins un parmi une amélioration de couverture, un découpage de réseau, un équipement utilisateur à capacité réduite ou une transmission de petites données,
dans lequel la configuration de ressources d'accès aléatoire associée est associée à des conditions d'accès pour la configuration d'au moins une combinaison de caractéristiques, et
dans lequel la configuration de ressources radio comprend au moins une partition d'accès radio attribuée à au moins un groupe de tranches de réseau.

15. Programme informatique comprenant des instructions pour amener l'appareil de l'une des revendications 5 à 11 à réaliser le procédé selon la revendication 14.
